# EUROPEAN PATENT APPLICATION

(11) **EP 1 544 092 A1**
(43) Date of publication of application: **22.06.2005**
(21) Application number: 03029177.7
(22) Date of filing: 18.12.2003
(51) Int. Cl.: B62K 3/06, B62K 19/06

(54) **Bicycle frame for female**

(71) Applicant: Ideal Bike Corporation, Wu-chi Town, Taichung (TW)
(72) Inventor: Chen, Jui-Ming, Wu Chi Town, Taichung (TW); Chen, Jeng-Ran, Wu Chi Town, Taichung (TW)
(74) Representative: Casalonga, Axel

(57) **Abstract**

A bicycle frame has a main bar (12), a front tube (16), a seat bar (13), an upper rear fork (14) and a lower rear bar (15). The main bar, the seat bar and the lower rear fork (15) are made by a composite tube (22) and the composite tube has an outer tube and at least three inner tubes in the outer tube. The composite tube is curved into a predetermined sharp to form an extended section (32) and a curved section (34). The extended section has an end thereof connected to the front tube and has the other end thereof connected to the curved section. The inner tubes are forked at a rear end of the curved section to form the seat bar and the lower rear fork respectively.

## Description

### BACKGROUND OF THE INVENTION

### 1. Field of the Invention

The present invention relates generally to a bicycle, and more particularly to a bicycle frame for female.

### 2. Description of the Related Art

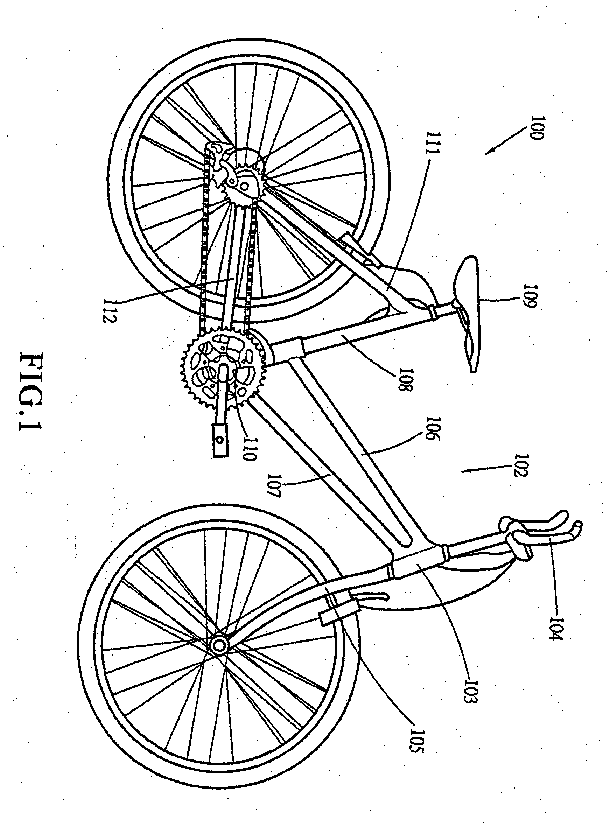

FIG. 1 shows a conventional frame 102 of a bicycle 100, wherein the frame 102 has a front tube 103, a handlebar 104 and a front fork 105 are extended from opposite ends of the front tube 103 respectively. An upper tube 106 and a lower tube 107 are coupled with the front tube 103 at a rear side thereof. A seat bar 108 is coupled with the upper tube 106 at a rear end thereof by welding. The seat bar 108 is coupled with a seat 109 and a five-way tube at opposite ends thereof. An upper rear fork 111 and a lower rear fork 112 is coupled with the seat bar 108. The lower tube 107 is tilted and has an end thereof coupled with the five-way tube 110.

In the conventional frame, the lower tube, the seat bar, the lower rear fork and the five-way tube are firmly coupled by welding. For the point of mechanics, the portions of the frame where are welded are the weaker portions of the structure. The frame is weaker in structure if there are more portions that have to be welded. Beside that, if a frame has more portions that have to be welded, which means the frame is cost much in fabrication.

Typically, there are two locations of the upper tube of the frame, which the upper tube is horizontal and coupled with the front tube and an upper side of the seat bar or the upper tube is tilted and coupled with the front tube and a lower side of the seat bar. The first frame makes user having to lift a leg backward to ride on the bicycle and the second frame makes user just having to flex the leg and cross over the upper tube. The first frame doesn't facilitate female who wear a skirt to ride on the bicycle but the second frame does, so that the bicycle with a horizontal upper tube is called "bicycle for male" and the bicycle with the tilted upper tube is called "bicycle for female".

The bicycle for female, which the upper tube is coupled with the five-way tube, still has a height that makes a lady how wear a long skirt not easy to ride on. So that how to lower the upper tube, or remove the upper tube from the frame, is a scope of designing the bicycle frame.

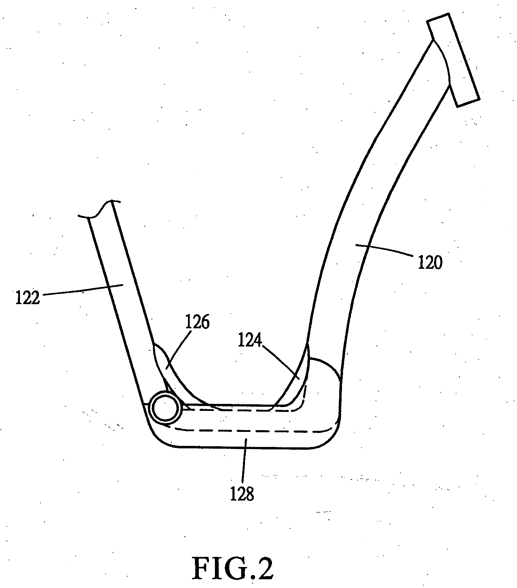

FIG. 2 shows a conventional frame of a bicycle without the upper tube, which a lower tube 120 is coupled with a bottom end of the seat bar 122 and two enhanced bars 124 and 126 are connected to a middle section of the lower tube 120 and the seat bar 122 and further two enhanced plates 128 are fixed to the lower tube 120 and the enhanced bars 124 and 126. The frame has a well strength of structure but there are many additional portions that have to be welded. In other words, the frame is higher in cost of fabrication.

The conventional frames of the bicycle for females have the problem of either the upper tube is not lower enough or the strength of the frame is not strong.

### SUMMARY OF THE INVENTION

The primary objective of the present invention is to provide a bicycle frame, which has a lower height for a lady to ride on and has a superior strength of structure.

According to the objective of the present invention, a bicycle frame has a main bar, a front tube, a seat bar, an upper rear fork and a lower rear bar. The main bar, the seat bar and the lower rear fork are made by a composite tube and the composite tube has an outer tube and at least three inner tubes in the outer tube. The composite tube is curved into a predetermined sharp to form an extended section and a curved section. The extended section has an end thereof connected to the front tube and has the other end thereof connected to the curved section. The inner tubes are forked at a rear end of the curved section to form the seat bar and the lower rear fork respectively.

### BRIEF DESCRIPTION OF THE DRAWINGS

FIG. 1 is a perspective view of a conventional bicycle for female;
FIG. 2 is a perspective view of in part of another conventional bicycle for female;
FIG. 3 is a perspective view of a preferred embodiment of the present invention;
FIG. 4 is a sectional view along the 4-4 line of FIG. 3;
FIG. 5 is a sectional view along the 5-5 line of FIG. 3 but the five-way tube not shown;
FIG. 6 is a sectional view along the 6-6 line of FIG. 3, and
FIG. 7 is a perspective view of a bicycle in which is the bicycle frame of the preferred embodiment of the present invention.

### DETAILED DESCRIPTION OF THE INVENTION

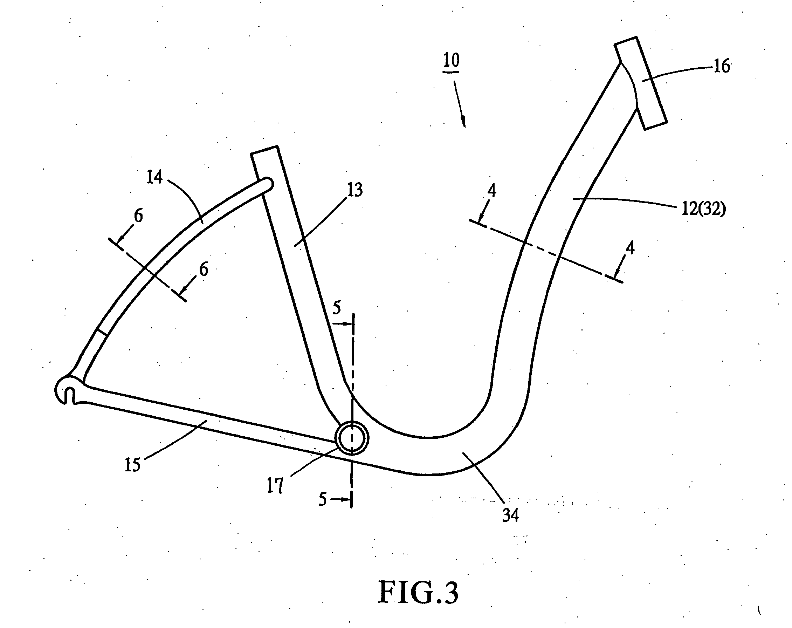

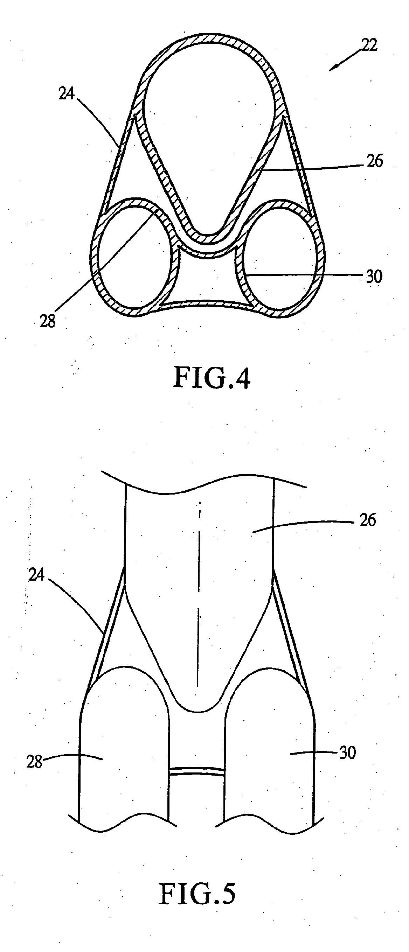

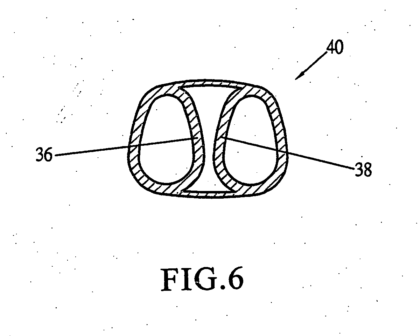

As shown in FIGS. from FIG. 3 to FIG. 6, a bicycle frame 10 of the preferred embodiment of the present invention has a main bar 12, a seat bar 13, an upper rear fork 14, a lower rear fork 15, a front tube 16 and a five-way tube 17. The front tube 16 is coupled with a front side of the main bar 12 by welding to mount a handlebar and a front fork (not shown) thereon. The seat bar 13 has a bottom end thereof connected to the main bar 12 and the upper rear fork 14 and the lower rear fork 15 are mounted at a rear side of the seat bar 13. The elements mentioned above are as same as a conventional bicycle frame and the characters of the present invention will be described hereunder.

The main bar 12, the seat bar 13 and the lower rear fork 15 are made into a single tube, which forks the seat bar 13 and the lower fork 15 from an end of the main bar 12 and the tube is named as a composite tube 22. The composite tube 22 has an outer tube 24 and three inner tubes 26, 28 and 30 in the outer tube 24. The inner tubes 26, 28 and 30 and the outer tube 24 are molded as a single unit. An inner diameter of the inner tube labeled 26 is greater than inner diameters of the other two inner tubes 28 and 30. The way of curving and forking composite tube 22 to form the main bar 12, the seat bar 13 and the lower rear fork 15 is that the composite tube 22 is curved at an end thereof to form an extended section 32 and the extended section 32 is curved again to form a curved section 34. The inner tubes 26, 28 and 30 are forked at a rear end of the curved section 34, wherein the inner tube 26 is curved upwards to form the seat bar 13 and the inner tubes 28 and 30 are extended rearwards to form branches of the lower rear fork 15. The upper rear fork 14 has two inner tubes 36 and 38 therein to form a composite tube 40. The inner tubes 36 are forked at a middle section of the composite tube 40 to form branches of the upper rear fork 14. The inner tubes 36 and 38 are coupled with the inner tubes 28 and 30 of the lower rear fork 15 respectively by welding.

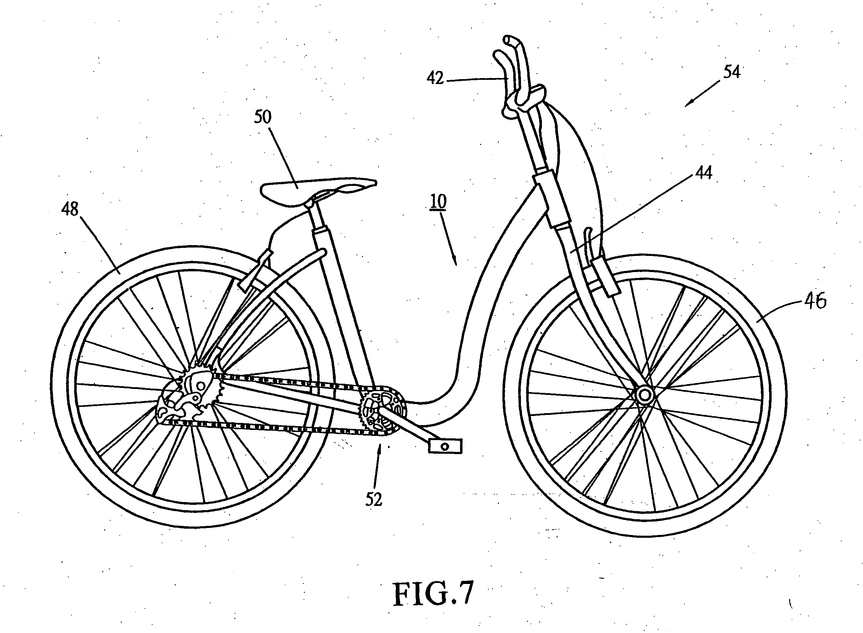

As shown in FIG. 7, the frame 10 of the present invention is mounted with a handlebar 42, a front fork 44, two wheels 46 and 48, a seat 50 and a transmission assembly 52 thereon to form a bicycle 54.

The present invention provides the composite tube 22 having three of the inner tubes therein to be the main bar 13 and forks at the end thereof to form the seat bar 13 and the lower rear fork 15. There is no portion of the main bar 12, the seat bar 13 and the lower rear fork 15 of the frame 10 that has to be welded so that the strength is stronger and the cost of fabrication is lower. The composite tube 22 has a superior performance in resistance of bend. The frame 10 of the present invention provides no enhance bar that lowers the frame 10 to facilitate ladies riding on.

The composite tube 22 has the curved section 34 at the rear thereof that enlarges the distance between the seat bar 13 and the extended section 32. The curved section 34 increases the space for a rider to cross over so that the frame 10 of the present invention has both advantages of lower in height and large space for a rider crossing over easier.

## Claims

1. A bicycle frame, comprising a main bar, a front tube mounted at a front side of the main bar, a seat bar connected to a rear end of the main bar, an upper rear fork connected to the seat bar and a lower rear bar;
wherein the main bar, the seat bar and the lower rear fork are made by a composite tube and the composite tube has an outer tube and at least three inner tubes in the outer tube;
wherein the composite tube is curved into a predetermined sharp to form an extended section and a curved section, and wherein the extended section has an end thereof connected to the front tube and has the other end thereof connected to the curved section and the inner tubes are forked at a rear end of the curved section to form the seat bar and the lower rear fork respectively.

2. The bicycle frame as defined in claim 1, wherein the amount of the inner tubes is three and the inner tubes are arranged at three angles of a triangle at a sectional view thereof with one of the which forms the seat bar and the other two of which form branches of the lower rear fork.

3. The bicycle frame as defined in claim 2, wherein the inner tube, which forms the seat bar, has a diameter greater than diameters of the other two of the inner tubes.

4. The bicycle frame as defined in claim 1, wherein the upper rear fork is made by a composite tube, which has an outer tube and two inner tubes in the outer tuber, wherein the inner tubes are coupled with branches of the lower rear fork respectively.

5. The bicycle frame as defined in claim 1, wherein the inner tubes of the composite tube are forked at an end of the outer tube to form branches of the upper rear fork.

6. The bicycle frame as defined in claim 4, wherein the inner tubes of the composite tube are forked at an end of the outer tube to form branches of the upper rear fork.

7. The bicycle frame as defined in claim 2, further comprising the five-way tube mounted at where the inner tubes are forked.
